# EUROPEAN PATENT SPECIFICATION

(11) **EP 3 847 115 B1**
(45) Date of publication and mention of the grant of the patent: **01.06.2022**
(21) Application number: 19780017.0
(22) Date of filing: 03.09.2019
(51) Int. Cl.: B65G 47/90, B65G 61/00, B65B 27/02, B65G 49/06

(54) **A PLANT FOR PALLETISING SLAB-SHAPED ARTICLES HAVING LARGE DIMENSIONS**
ANLAGE ZUM PALETTIEREN VON PLATTENFÖRMIGEN GEGENSTÄNDEN MIT GROSSEN ABMESSUNGEN
INSTALLATION DE PALETTISATION D'ARTICLES EN FORME DE PLAQUES DE GRANDES DIMENSIONS

(30) Priority: 03.09.2018 IT 201800008293
(43) Date of publication of application: 14.07.2021
(73) Proprietor: SACMI TECH S.P.A., 40026 Imola (BO) (IT)
(72) Inventor: BARDI, Maurizio, 41043 Formigine (MO) (IT)
(74) Representative: Dall'Olio, Christian
(86) International application number: PCT/IB2019/057411
(87) International publication number: WO 2020/049455

(56) References cited:
- EP-A1- 2 537 784
- EP-A1- 3 173 195
- CN-A- 103 171 792
- US-A- 3 682 329

## Description

### FIELD OF THE INVENTION

The present invention relates to the technical sector concerning the palletising of slab-shaped articles, being large-dimension tiles.

### DESCRIPTION OF THE PRIOR ART

In order to be transported from the production site to the place of sale and/or laying, large-dimension tiles must be properly packed.

One way of packaging at present carried out includes using benches or pallets or stands, which have a rest plane for the tiles, and a vertical wall, against which the tiles are leant in a vertical position.

With the use of these benches, the large-dimension tiles are rested in a vertical position, for example resting on a larger longitudinal side thereof, on the rest plane and brought against the vertical wall.

This particular type of bench, with respect to those having an inclined rest wall for the tiles, enables stacking a plurality of benches on one another and thus enables a more efficient storage and/or transport.

Once the tiles are stacked on the bench, the tiles must be packed, for example with the use of a strapping machine which carries out a series of strapping operations by applying straps, or strapping, about the tiles to keep them joined to one another and compact and facilitate transport thereof.

A critical step during the palletising operations of the tiles, in particular during the arranging and resting operations of the tiles vertically on the benches, such as the ones described in the foregoing, relates to stability, i.e. the maintaining of the position and vertical configuration thereof, before the strapping machine can carry out the strapping operations.

In fact, the mere presence of the vertical wall, given the significant size of the tiles, is not able to guarantee that the tiles remain stable, and vertical, once positioned resting on the rest plane of the bench and flanked to the vertical wall, averting the risk that due to their weight they might tilt over.

In the palletising plants known at present, a gripping device is used to position the large-dimension tiles resting and in vertical configuration on the benches.

The gripping device must pick up and raise the tiles once, having been transported by a conveyor, they are tilted into a vertical position by a tilting device.

A gripping device at present used in palletising plants of the prior art comprises a frame comprising a series of longitudinal and transversal arms on which a series of suction cups, for example aspirating suction cups, are mounted.

The frame must have a significant dimension that is such that the relative longitudinal and transversal arms are arranged so that the suction cups can act on a sufficiently large area of a face of the tiles in order to be able to grip and move the tiles.

The frame is moved in space by an anthropomorphic robot which is activated so as to be able to position the frame at a face of a tile, once arranged vertically by the tilting device, so that the suction cups can abut the face of the tile and exert the gripping action of the suction cups on the face.

The anthropomorphic robot is then activated so as to move the frame up to positioning the frame at a bench, in order to position the tile resting on the bench in a vertical configuration, flanked to the vertical wall.

The robot is then commanded to keep the frame in this position, with the purpose of maintaining the tile in the vertical position, in order to prevent any tilting, while at the same time the strapping machine carries out at least one strapping operation.

The palletising plants at present used have some drawbacks, related to the use of a gripping device of this type.

In fact, the gripping device is, firstly, very large and thus it follows that the palletising plant must have an adequate free space for manoeuvre by the side of the tiles and by the side of the bench, consequently limiting the possibility of arranging and moving the strapping machine.

Further, the gripping action of the suction cups, which act on one face only of the tile, can be to some extent inefficient, as the dimensions of the tiles are very large owing to the great weight thereof.

Lastly, in a case of a size change of the tiles to be arranged on the bench and strapped with the strapping machine, there might be a need, in the palletising plant, to proceed to the replacement of the frame bearing the gripping device with another having adequate dimensions for the size of the tiles.

Document EP 2.537.784 discloses a plant for palletising large dimension tiles according to the preamble of claim and a method for palletising slab-shaped articles having large dimensions according to the preamble of claim 10.

### SUMMARY OF THE INVENTION

The aim of the present invention is therefore to provide a new plant for palletising slab-shaped articles, being tiles, able to obviate the drawbacks of the prior art described in the foregoing.

In particular, the aim of the present invention is to provide a new plant for palletising slab-shaped articles, being tiles, having large-dimensions and provided with a gripping device able to guarantee an optimal grip and lock on the tile, to position the tile vertically resting on a support element, such as for example a bench having a rest plane and a vertical wall, and to maintain the tile vertical, preventing it from any tendency to tilt, without requiring a predisposing of manoeuvring spaces by the sides of the bench, and thus enabling optimal functioning of the strapping machine.

The above aims are attained by a plant for palletising slab-shaped articles, being large-dimension tiles, having large dimensions, according to claim 1, and a method for palletising slab-shaped articles having large dimensions, being tiles, according to claim 10.

### BRIEF DESCRIPTION OF THE DRAWINGS

The characteristics of preferred embodiments of the palletising plant of slab-shaped articles, being large-dimension tiles, of the present invention are described in the following with reference to the appended tables of drawings, in which:
- figure 1A illustrates a frontal view of significant components of a gripping device, according to a first possible embodiment, present in the palletising plant of the invention;
- figure 1B is a first lateral view of a first side of the gripping device of figure 1A while figure 1C is a second lateral view of a second side of the gripping device of figure 1A;
- figure 2A illustrates a frontal view of a further embodiment of a gripping device present in the palletising plant of the invention;
- figure 2B is a first lateral view of a first side of the gripping device of figure 2A while figure 2C is a second lateral view of a second side of the gripping device of figure 2A;
- figure 3 is a schematic perspective view of a plant for palletising slab-shaped articles having large dimensions, such as for example tiles, according to the present invention;
- figure 3B illustrates the plant of figure 3A, in a perspective view from another angle, during a step in which the gripping device takes one tile at a time arranged vertically by a tilting device present in the palletising plant of the invention;
- figures from 4A to 4C illustrate, in relative frontal view, an operating sequence in which the gripping device takes a tile arranged vertically from the tilting device;
- figure 4D is a lateral view of figure 4C;
- figure 5 illustrates detail K of figure 4C in larger scale;
- figure 6A illustrates, in a lateral view, the gripping device at the moment in which it positions, vertically, the tile resting on a bench, having a vertical wall, present in the palletising plant of the invention;
- figure 6B is a front view of figure 6A;
- figure 6C illustrates detail K' of figure 6B in larger scale;
- figure 7A illustrates, in a lateral view, the gripping device at the moment in which it releases the grip thereof on the tile, and disengages from the tile, while maintaining it in a vertical position;
- figure 7B is a front view of figure 7A;
- figure 7C illustrates the detail denoted by K" of figure 7B in larger scale;
- figure 8A illustrates, in a lateral view, a possible position of the gripping device with respect to the tile arranged on the bench, wherein the gripping device has released the grip and has disengaged from the tile but continues to keep the tile in a vertical position;
- figure 8B is a lateral view of the gripping device in the position of figure 8A in which it enables a strapping machine present in the palletising plant of the invention to carry out at least one strapping operation.

### DESCRIPTION OF THE PREFERRED EMBODIMENTS

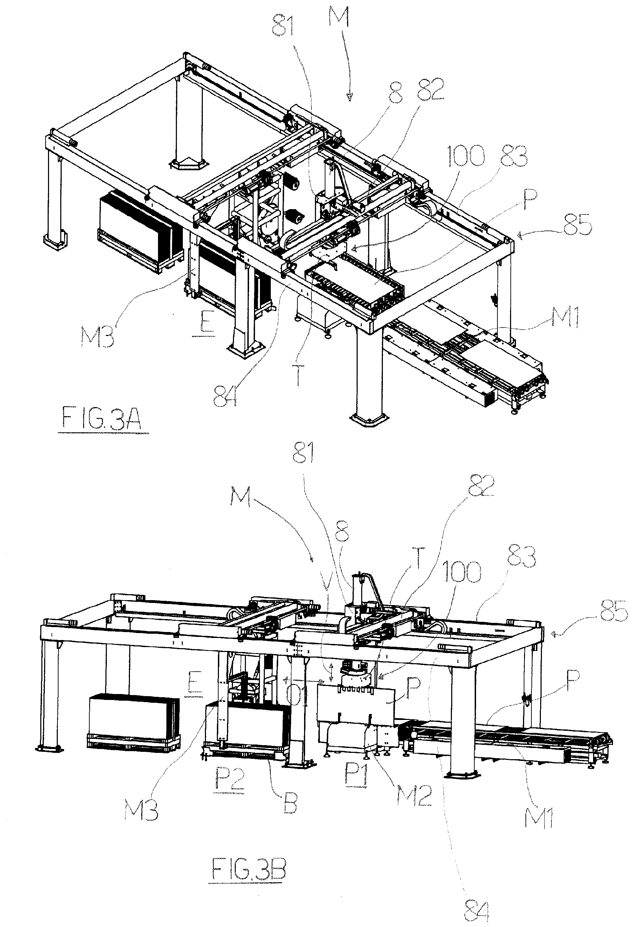

Figures 3A and 3B illustrate the plant (M) for palletising slab-shaped articles, being large-dimension tiles (P), of large dimensions, described in the present invention.

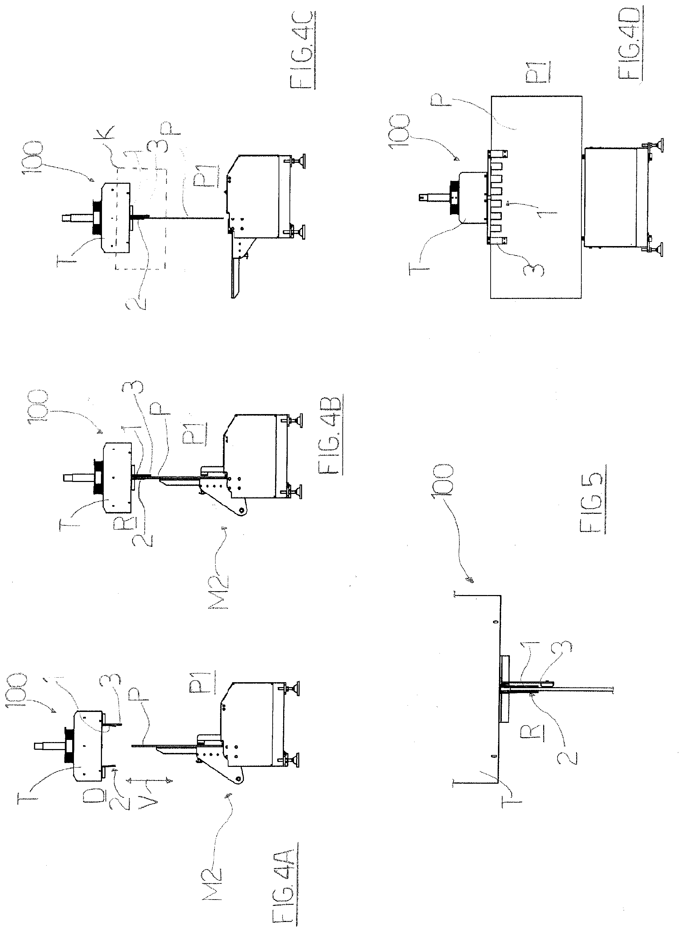

The plant (M) comprises:
conveying means (M1), for conveying tiles (P);
a tilting device (M2), for picking up a tile (P) from the conveying means (M1) and for tilting the tiles (P) into a vertical configuration positioning the tiles (P) in a first pick-up position (P1) with respect to the conveying means (M1) (see for example figures 4A-4C in detail);
a palletising station (E), comprising a support element (B), constituted by a bench, pallet or stand, comprising a rest plane of the tiles and a vertical wall, in a second release position (P2) with respect to the conveying means (M1), on which the tile (P) is to be positioned vertically;
a strapping machine (M3) for strapping the vertically-arranged tiles (P) on the support element (B).

The plant (M) further comprises a gripping device (100) designed and configured to pick up the tile (P) from first pick-up position (P1) move and position the tile (P) in the second release position (P2) vertically on the support element (B).

The support element (B), as mentioned in the foregoing, is constituted by a bench, or pallet, or stand, comprising a rest plane of the tiles and a vertical wall, on which the tile is to be arranged vertically flanked to the vertical wall, then to be packed, by the strapping machine which applies straps/strapping about the tile in order to keep it stable and fixed to the support element, for the purposes of transport and/or storage thereof.

The gripping device (100) comprises:
a head (T), movable in a vertical movement direction (V) and at least in a first horizontal movement direction (O1), perpendicular to the vertical direction (V), in such a way as to be movable above the first pick-up position (P1), wherein a tile (P) is vertically arranged, and above the second release position (P2), wherein the tile (P) must be released and positioned vertically above the support element (B);
gripping means (1, 2), which are mounted on the head (T) and movable with respect to the head (T) between a splayed configuration (D) and a neared position (R), the gripping means (1, 2) are configured in such a way that, when placed in the neared configuration (R), so as to be able to clamp a tile (P) and exert a gripping action on the tile (P).

The gripping device (100) is predisposed and configured in such a way that the head (T), with the gripping means (1, 2) in the splayed configuration (D), is positionable above a tile (P) arranged vertically in the first pick-up position (P1), and movable along the vertical direction (V) towards the tile (P) in such a way that the gripping means (1, 2) are arranged at the sides of the two faces of the tile (P), and wherein the gripping means (1, 2) are then movable into the neared configuration (R) in order to clamp the tile (P) and exert a gripping action on the two faces of the tile (P) (see for example figure 3B and figures from 4A to 4C).

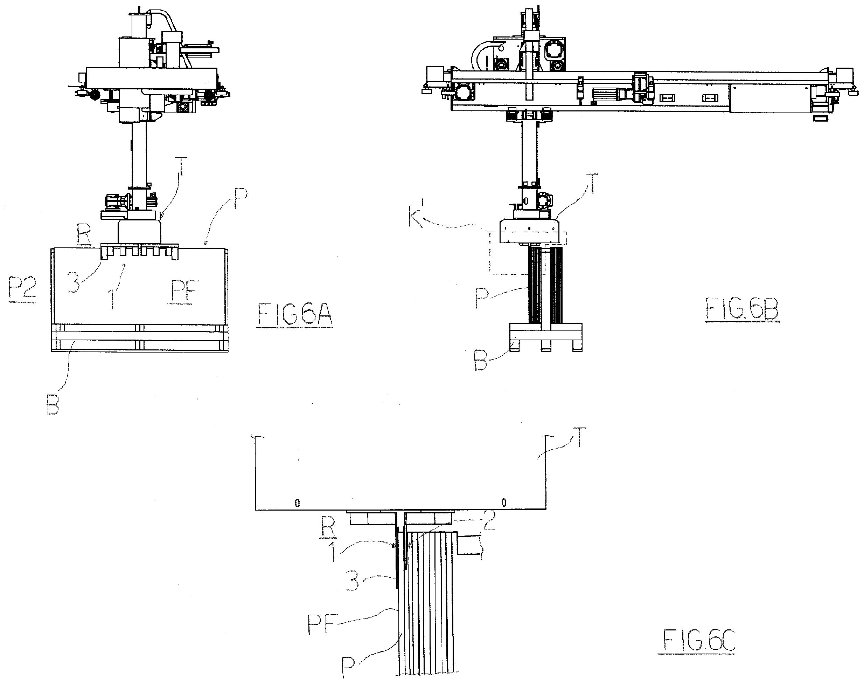

Further, the gripping device (100) is predisposed and configured in such a way that the head (T), with the gripping means (1, 2) in the neared configuration (D), is movable along the first horizontal direction (O1) in order to be positioned in the second release position (P2) above the support element (B) and movable along the vertical direction (V) towards the support element (B) in order to position the tile (P), retained by the gripping means (1, 2), vertically on the support element (B) (see again, for example, figure 3 and figures 6A and 6B).

The gripping device (100) further comprises at least a lateral abutment element (3) of the tile (P).

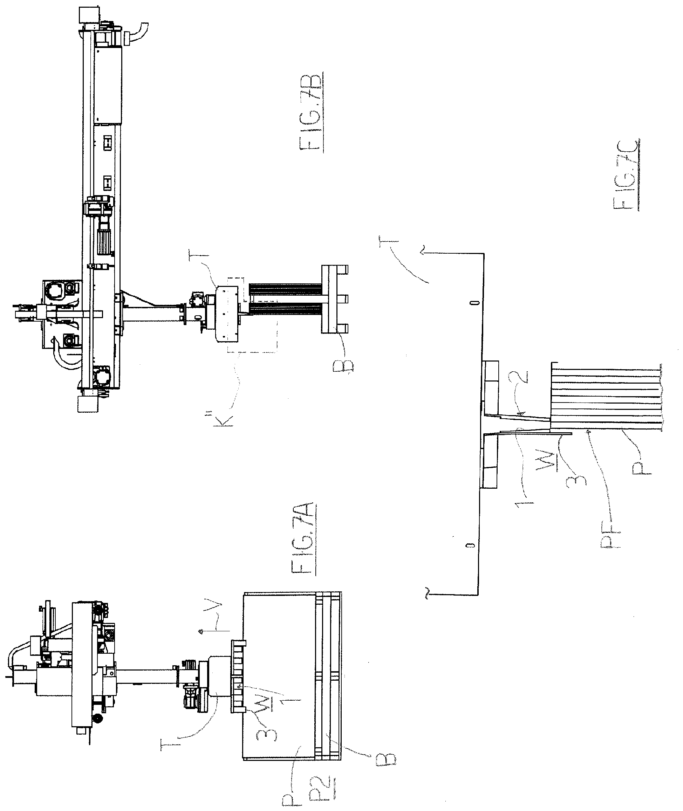

The lateral abutment element (3) is predisposed and configured, with respect to the head (T) and the gripping means (1, 2), in such a way that when the gripping means (1, 2) are activated to release the grip on the tile (P) positioned on the support element (B) and the head (T) is moved along the vertical direction (V) in order to raise the gripping means (1, 2) by an amount such as to disengage the gripping means (1, 2) from the tile (P), the lateral abutment element remains in an abutting position (W) facing a portion of a face (PF) of the tile (P) so as to prevent a tilting of the tile (P) (see in particular figures 7A, 7B and 7C).

Owing to the special characteristics as described in the foregoing, in the palletising plant (M) of the invention, the gripping device (100) is able to pick up from above the tile (P) positioned vertically in the first pick-up position (P1) by means of the tilting device (M2), by clamping it between the gripping means (1, 2) and then transferring the tile (P) in the second release position (P2), lowering it and positioning it on the support element (B).

In this way, a manoeuvring space can be left completely free by the sides of the support element (B), which space can be used for an optimal positioning of the strapping machine (M3) which is to carry out the packing operations of the tile arranged on the support element (B).

Further, owing to the special detail of the presence of the lateral abutment element (3), with the gripping device of the palletising plant of the invention the tile, once positioned vertically on the support element, and once the gripping means have released the grip thereon and have been raised to disengage from the tile, can tilt due to the weight thereof.

In fact, as can be noted in figure 7C, the lateral abutment element (3), being arranged facing a portion of a face (PF) of the tile (P), constitutes an abutment against any tilting thereof, thus preventing the tile (P) from tilting and falling from the support element (B).

A further advantageous aspect of the palletising plant of the present invention relates to the possibility that, in the gripping device (100), the head (T) is movable in the above-mentioned first horizontal direction (O1).

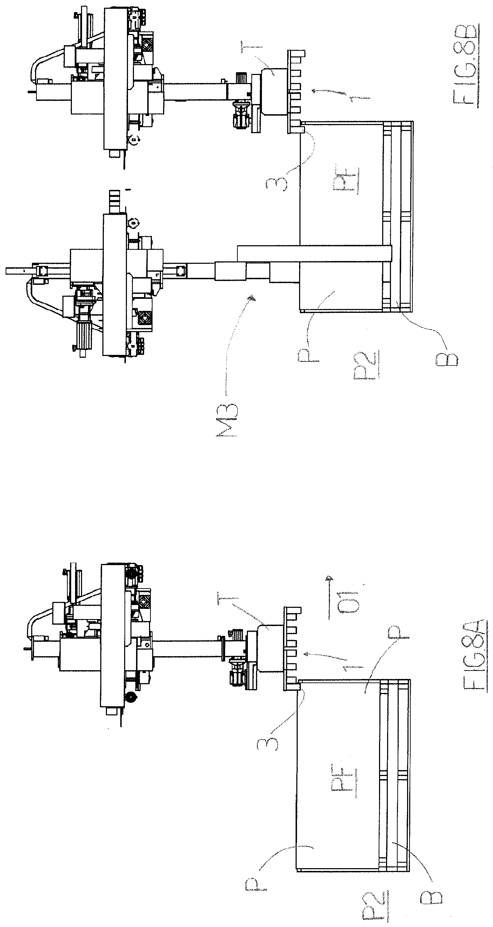

In fact, owing to this aspect, once the gripping means (1, 2) have released the grip on the tile (P) arranged vertically on the support element (B), and have been raised to disengage from the tile, thus maintaining the abutment element (3) in the abutting position (W) facing a portion of a part of a face of the tile (situation illustrated in figure 7), the head (T) can be translated along the first horizontal direction (O1) (see figure 8A), so as to translate the gripping means (1, 2) laterally with respect to the tile (P), leaving the abutment element (3) in any case in the position facing the tile.

This enables making a free manoeuvring space all about the tile (P) for carrying out packing operations of the tile by the strapping machine (M3) which can then apply straps/strapping about the tile arranged on the support element (see for example figure 8B in which the strapping machine (M3) is illustrated).

In the palletising plant of the invention, the ways in which the head (T) can be moved above the first pick-up position (P1) and the second release position (P2), by movements along a vertical direction (V) and a first horizontal direction (O1), perpendicular to the vertical direction (V), can be very varied, and within the capabilities of any technician in the sector. The following contains a possible way, with reference to the use of the gripping device in a palletising plant of slab-shaped articles of large dimensions, constituted, for example, by tiles.

The gripping means (1, 2) of the gripping device (100) are preferably constituted in the following way.

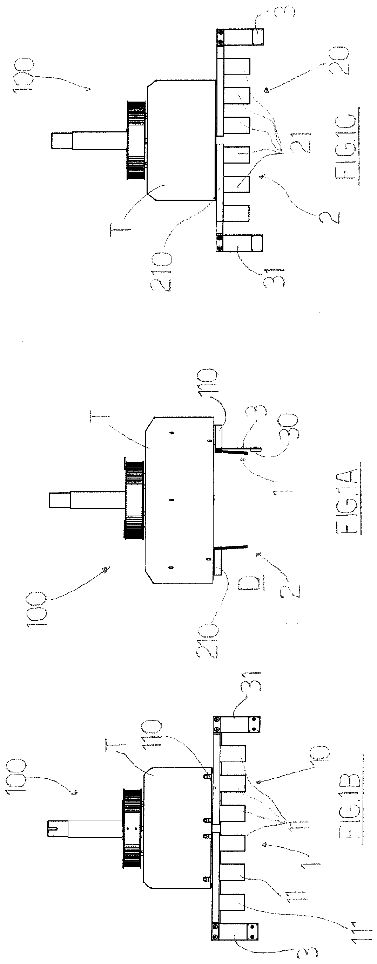

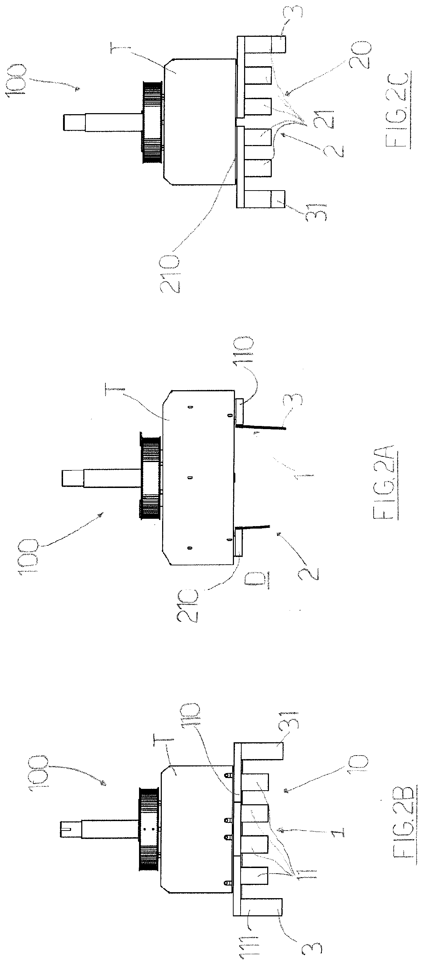

The gripping means (1, 2) comprise a first series (10) of gripping elements (11) arranged in a row, distanced from one another, which are borne by a first support element (110) mounted on the head (T), and a second series (20) of gripping elements (21) arranged in a row, distanced from one another, and borne by a second support element (210) mounted on the head (T) (see for example figures 1A and 2A).

In particular, the first support element (110) and the second support element (210) are mounted on the head (T) in such a way as to be neared to one another, in order to position the gripping means (1, 2) in the neared position (R), and distanced from one another, in order to position the gripping means (1, 2) in the splayed position (D).

Each gripping element (11) of the first series (10) of gripping elements (11) is configured in such a way as to have a flat gripping portion for abutting a corresponding portion of a first face of the tile (P) and each gripping element (21) of the second series (20) of gripping elements (21) is configured in such a way as to have a flat gripping portion for abutting a corresponding portion of a second face of the tile (P).

When the gripping means (1, 2) are brought into the neared configuration thereof to grip a tile, this enables guaranteeing a more effective grip.

The gripping elements of the two series of gripping elements can be arranged facing one another, as illustrated in the figures, or can be arranged offset to one another.

In a preferred but not exclusive embodiment, illustrated in figures 1A, 1B and 1C, the at least a lateral abutment element (3) can be mounted on either one from between the first support element (110) and the second support element (210). For example, in figures 1A, 1B and 1C the lateral abutment element (3) is mounted on the first support element (110).

To perform its function, the lateral abutment element (3) is such as to have a greater length than the gripping elements (11, 21) of the first series (10) of gripping elements (11) and the second series (20) of gripping elements (21).

The lateral abutment element (3) can preferably be provided with a damping member (30), to dampen any impact on the tile.

The at least a lateral abutment element (3) can preferably be mounted at a side of a first gripping element (111) of the row of gripping elements (11) of the first series (10) of gripping elements (10) (as shown in the preferred embodiment of figures 1A, 1B, 1C) or at a side of a first gripping element of the row of gripping elements (21) of the second series (20) of gripping elements (21). This arrangement enables the head (T) to be translated, and therefore the gripping means (1, 2), completely by the side of the tile once positioned and released on the support element (B) (as shown in figures 8A, 8B) leaving the two faces of the tile completely free so that the strapping machine (M3) can effectively carry out the strap/strapping application operations about the tile, fastening it to the support element.

In a further possible preferred embodiment, illustrated in figures 2A, 2B and 2C, the at least a lateral abutment element (3) can be positioned and mounted at a first gripping element of the first series (10) of gripping elements (11) or the second series (20) of gripping elements (21) and such as to increase the length of the gripping element with respect to the other gripping elements, in fact constituting a prolongation thereof.

In particular, in this case, the lateral abutment element (3) is mounted at a first gripping element (111) of the row of gripping elements (11) of the first series (10) of gripping elements (as shown in the figures), constituting a prolongation thereof, or a first gripping element of the row of gripping elements (21) of the second series (20) of gripping elements (21).

In both the two possible embodiments described in the foregoing, the gripping device (100) can preferably also be provided with a further second other lateral abutment element (31), or possibly with further other lateral abutment elements, which can be mounted and predisposed on the first (110) or second (210) support element, or directly on the gripping elements, constituting a prolongation thereof.

In other preferred aspects, the gripping device (100) mounted in the palletising plant of the invention can be configured and designed in such a way that the head (T) is movable in a second horizontal movement direction, perpendicular to the vertical direction (V) and to the first horizontal direction (O1).

Further, the gripping device (100) can be configured and designed so that the head (T) can be activatable in rotation about a vertical rotation axis.

For example, the ways in which the head (T) of the gripping device mounted in the palletising plant of the invention can be movable in the vertical direction (V), in the first horizontal direction (O1), in a second horizontal direction, and is activatable in rotation about a vertical rotation axis, can be as follows (see for example figures 3A and 3B).

The head (T) is mounted on a shaft (8) which is borne arranged vertically, and rotatably about an axis thereof, by a support carriage (81); the shaft (8) is further borne by the support carriage (81) so as to be vertically translatable with respect to the support carriage (81).

The support carriage (81) is mounted translatably on a cross member (82) which, in turn, is mounted translatably on two raised longitudinal members (83, 84) of a portal (85) which is arranged above the conveying means (M1) and the palletising station (E).

The longitudinal members (83, 84) of the portal (85) have a length such as to enable the support carriage (81) to be movable at least between the tilting device (M2) and the palletising station (E).

In this way, the head (T) can be moved:
in a vertical direction (V), following the vertical translation of the shaft (8) with respect to the support carriage (81),
in the first horizontal direction (O1), following the translation of the cross member (82) along the raised longitudinal members (83, 84) of the portal (85),
in the second horizontal direction, following the translation of the support carriage (81) along the cross member (82);
in rotation about a vertical axis, following the rotation of the shaft (81) about the axis thereof with respect to the support carriage (81).

The possibility for the head (T) to be activated in rotation about a vertical axis enables the gripping device to be utilisable in order to position the tiles vertically on both sides of the benches.

Definitively, the palletising plant of the present invention has a small lateral volume, as well as providing an adequate installation and manoeuvring space for the strapping machine (M3).

Further, in order to carry out the strapping about the tile arranged vertically on the bench, the packing operations that the strapping machine is to perform will be facilitated as the gripping device will prevent any tilting of the tiles.

Further, while maintaining the lateral abutment element in any case in a position facing the tile, the gripping device, even when the gripping means have been raised and disengaged from the tile, can be positioned, with respect to the tile arranged on the bench, in a lateral position with respect to the tile, illustrated in figures 8A and 8B, thus leaving an appropriate and adequate free space for manoeuvre for the movement and activation of the strapping machine.

Another aspect of the invention is to provide a method for palletising slab-shaped articles having large dimensions, being tiles (P), by means of a support element (B), with a rest plane and a vertical wall for supporting the tiles in a vertical configuration, and a strapping machine (M3).

The method comprises positioning a tile (P) in a vertical configuration in a first pick-up position (P1), by means of a tilting device (M2) which tilts the tile (P) transported on the conveying means (M1), and picking up the tile (P) from the first pick-up position (P1) and transferring it into a second release position (P2), positioning the tile (P) in a vertical configuration on the support element (B).

In order to pick up the tile (P) from the first pick-up position (P1) and transfer and position it in the second release position (P2) vertically above the support element (B), the method comprises use of a gripping device (100) comprising:
a head (T), movable in a vertical movement direction (V) and at least in a first horizontal movement direction (O1), perpendicular to the vertical direction (V), gripping means (1, 2), mounted on the head (T) and movable with respect to the head (T) between a splayed configuration (D) and a neared configuration (R), the gripping means (1, 2) being configured in such a way that, when placed in the neared configuration (R), so as to be able to clamp a tile (P) and exert a gripping action on the tile (P),
at least a lateral abutment element (3) of the tile (P), the lateral abutment element (3) being predisposed and configured, with respect to the head (T) and the gripping means (1, 2), in such a way that when the gripping means (1, 2) are activated into the splayed configuration (D) in order to release the grip on the tile (P) and the head (T) is moved along the vertical direction (V) in order to raise the gripping means (1, 2) by an amount such as to disengage the gripping means (1, 2) from the tile (B), the lateral abutment element (3) is in an abutting position facing a portion of a face (PF) of the tile (P) so as to prevent a tilting of the tile (P).

The method comprising carrying out following steps:
moving the head (T), with the gripping means (1, 2) in the splayed configuration (D), along the first horizontal movement direction (O1) in order to position the gripping means (1, 2) above the tile (P) arranged vertically in the first pick-up position (P1),
moving the head along the vertical direction (V) towards the tile (P) in such a way that the gripping means (1, 2) are arranged at the sides of the two faces of the tile (P), and activating the gripping means (1, 2) into the neared configuration (R) in order to clamp the tile (P) and exert a gripping action on the two faces of the tile (P),
moving the head (T), with the gripping means (1, 2) in the neared configuration (D), along the first horizontal direction (O1) in order to position the tile (P) retained by the gripping means (1, 2) into the second release position (P2) above the support element (B) and moving the head (T) along the vertical direction (V) towards the support element (B) in order to position the tile (P) vertically on the support element (B), resting against the vertical wall,
activating the gripping means (1, 2) into the splayed configuration (D) in order to release the grip on the tile (P) positioned vertically on the support element (B) and raise the head (T) along the vertical direction (V) in order to raise the gripping means (1, 2) by an amount such as to disengage the gripping means (1, 2) from the tile (B) and so that the lateral abutment element (3) remains in an abutting position facing a portion of a face (PF) of the tile (P) so as to prevent a tilting of the tile (P),
moving the head (T), with the gripping means (1, 2) raised and disengaged from the tile (P) and with the lateral abutment element (3) in the abutting position (W) facing a portion of a face of the tile (FP) of the tile (P), along the first horizontal direction (O1) so as to translate the gripping means (1, 2) laterally with respect to the tile (P) leaving the lateral abutment element (3) in the abutting position (W) facing the face (FP) of the tile (P) in order to prevent a tilting of the tile (P), making a free manoeuvring space about the tile (P),
using the free manoeuvring space about the tile (P) in order to apply a strap about the tile (P) by means of the strapping machine (M3).

## Claims

1. A plant (M) for palletising slab-shaped articles, being large-dimension tiles (P), comprising:
conveying means (M1), for conveying tiles (P);
a tilting device (M2), for gripping a tile (P) from the conveying means (M1) and
for tilting the tile (P) into a vertical configuration, positioning the tile in a first pick-up position (P1) with respect to the conveying means (M1);
a palletising station (E), comprising a support element (B), constituted by a bench comprising a rest plane and a vertical wall, in a second release position (P2) with respect to the conveying means (M1), on which the tile (P) is to be positioned vertically;
a gripping device (100), for picking up the tile (P) from the first pick-up position (P1) and for moving and positioning the tile (P) in the second release position (P2) vertically on the support element (B),
wherein the gripping device (100) comprises:
a head (T), movable in a vertical movement direction (V) and at least in a first horizontal movement direction (O1), perpendicular to the vertical direction (V), in such a way as to be movable above the first pick-up position (P1), wherein the tile (P) is vertically arranged, and above the second release position (P2), wherein the tile (P) must be released and positioned vertically above the support element (B),
gripping means (1, 2), mounted on the head (T) and movable with respect to the head (T) between a splayed configuration (D) and a neared configuration (R), the gripping means (1, 2) are configured in such a way that, when placed in the neared configuration (R), they are able to clamp a tile (P) and exert a gripping action on the tile (P),
wherein the head (T), with the gripping means (1, 2) in the splayed configuration (D), is positionable above a tile (P) arranged vertically in the first pick-up position (P1), and movable along the vertical direction (V) towards the tile (P) in such a way that the gripping means (1, 2) are arranged at the sides of the two faces of the tile (P), and wherein the gripping means (1, 2) are then movable into the neared configuration (R) in order to clamp the tile (P) and exert a gripping action on the two faces of the tile (P),
wherein the head (T), with the gripping means (1, 2) in the neared configuration (D), is movable along the first horizontal direction (O1) in order to be positioned in the second release position (P2) above the support element (B) and movable along the vertical direction (V) towards the support element (B) in order to position the tile (P), retained by the gripping means (1, 2), vertically on the support element (B) resting against the vertical wall,
the gripping device (100) further comprising at least a lateral abutment element (3) of the tile (P), the lateral abutment element (3) being predisposed and configured, with respect to the head (T) and the gripping means (1, 2), in such a way that when the gripping means (1, 2) are activated into the splayed configuration (D) in order to release the grip on the tile (P) positioned vertically on the support element (B) and the head (T) is moved along the vertical direction (V) in order to raise the gripping means (1, 2) by an amount such as to disengage the gripping means (1, 2) from the tile (P), the lateral abutment element (3) remains in an abutting position (W) facing a portion of a face (PF) of the tile (P) so as to prevent a tilting of the tile (P),
**characterized in that** the plant (M) further comprises a strapping machine (M3) for strapping the vertically-arranged tiles (P) on the support element (B),
and wherein the head (T), with the gripping means (1, 2) raised and disengaged from the tile (P) and with the lateral abutment element (3) in the abutting position (W) facing a portion of a face (FP) of the tile (P), is movable along the first horizontal direction (O1) so as to translate the gripping means (1, 2) laterally with respect to the tile (P) leaving the lateral abutment element (3) in the abutting position (W) facing the face (FP) of the tile (P) in order to prevent a tilting of the tile (P), making a free manoeuvring space about the tile (P) for carrying out packing operations by the strapping machine (M3) for strapping the vertically-arranged tiles (P) on the support element (B).

2. The plant (M) of claim 1, wherein the gripping means (1, 2) comprise a first series (10) of gripping elements (11) arranged in a row, distanced from one another, and borne by a first support element (110) mounted on the head (T), and a second series (20) of gripping elements (21) arranged in a row, distanced from one another, and borne by a second support element (210) mounted on the head (T), the first support element (110) and the second support element (210) being mounted on the head (T) in such a way as to be neared to one another, in order to position the gripping means (1, 2) in the neared position (R), and distanced from one another, in order to position the gripping means (1, 2) in the splayed position (D), and wherein each gripping element (11) of the first series (10) of gripping elements (11) is configured in such a way as to have a flat gripping portion for abutting a corresponding portion of a first face of the tile (P) and each gripping element (21) of the second series (20) of gripping elements (21) is configured in such a way as to have a flat gripping portion for abutting a corresponding portion of a second face of the tile (P).

3. The plant (M) of claim 2, wherein the at least a lateral abutment element (3) is mounted on one from between the first support element (110) and the second support element (210) and has a greater length than the gripping elements (11, 21) of the first series (10) of gripping elements (11) and the second series (20) of gripping elements (21).

4. The plant (M) of claim 3, wherein the at least a lateral abutment element (3) is mounted at a side of a first gripping element (111) of the row of gripping elements (11) of the first series (10) of gripping elements (10) or at a side of a first gripping element of the row of gripping elements (21) of the second series (20) of gripping elements (21).

5. The plant (M) of claim 2, wherein the at least a lateral abutment element (3) is positioned at a first gripping element of the first series (10) of gripping elements (11) or of the second series (20) of gripping elements (21) and is such as to increase the length of the gripping element with respect to the other gripping elements.

6. The plant (M) of claim 5, wherein the lateral abutment element (3) is positioned at a first gripping element (111) of the row of gripping elements (11) of the first series (10) of gripping elements or of a first gripping element of the row of gripping elements (21) of the second series (20) of gripping elements (21).

7. The plant of any one of the preceding claims, wherein the head (T) is movable in a second horizontal movement direction, perpendicular to the vertical direction (V) and to the first horizontal direction (O1).

8. The plant according to any one of the preceding claims, wherein the head (T) is activatable in rotation about a vertical rotation axis.

9. The plant (M) of claim 8, wherein the head (T) is mounted on a shaft (8) which is borne vertically-arranged, and rotatably about an axis thereof, by a support carriage (81), the shaft (8) being borne by the support carriage (81) so as to be vertically translatable with respect to the support carriage (81), wherein the support carriage (81) is mounted translatably on a cross member (82) which, in turn, is mounted translatably on two raised longitudinal members (83, 84) of a portal (85).

10. A method for palletising slab-shaped articles having large dimensions, being tiles (P), by means of a support element (B), with a rest plane and a vertical wall for supporting the tiles in a vertical configuration, and a strapping machine (M3), comprising positioning a tile (P) in a vertical configuration in a first pick-up position (P1), by means of a tilting device (M2) which tilts the tile (P) transported on the conveying means (M1), and picking up the tile (P) from the first pick-up position (P1) and transferring it into a second release position (P2), positioning the tile (P) in a vertical configuration on the support element (B),
wherein, in order to pick up the tile (P) from the first pick-up position (P1) and transfer and position it in the second release position (P2) vertically above the support element (B), the method comprises use of a gripping device (100) comprising:
a head (T), movable in a vertical movement direction (V) and at least in a first horizontal movement direction (O1), perpendicular to the vertical direction (V), gripping means (1, 2), mounted on the head (T) and movable with respect to the head (T) between a splayed configuration (D) and a neared configuration (R), the gripping means (1, 2) being configured in such a way that, when placed in the neared configuration (R), so as to be able to clamp a tile (P) and exert a gripping action on the tile (P),
at least a lateral abutment element (3) of the tile (P), the lateral abutment element (3) being predisposed and configured, with respect to the head (T) and the gripping means (1, 2), in such a way that when the gripping means (1, 2) are activated into the splayed configuration (D) in order to release the grip on the tile (P) and the head (T) is moved along the vertical direction (V) in order to raise the gripping means (1, 2) by an amount such as to disengage the gripping means (1, 2) from the tile (B), the lateral abutment element (3) remains in an abutting position (W) facing a portion of a face (PF) of the tile (P) so as to prevent a tilting of the tile (P),
the method comprising carrying out following steps:
moving the head (T), with the gripping means (1, 2) in the splayed configuration (D), along the first horizontal movement direction (O1) in order to position the gripping means (1, 2) above the tile (P) arranged vertically in the first pick-up position (P1),
moving the head (T) along the vertical direction (V) towards the tile (P) in such a way that the gripping means (1, 2) are arranged at the sides of the two faces of the tile (P), and activating the gripping means (1, 2) into the neared configuration (R) in order to clamp the tile (P) and exert a gripping action on the two faces of the tile (P),
moving the head (T), with the gripping means (1, 2) in the neared configuration (D), along the first horizontal direction (O1) in order to position the tile (P) retained by the gripping means (1, 2) into the second release position (P2) above the support element (B) and moving the head (T) along the vertical direction (V) towards the support element (B) in order to position the tile (P) vertically on the support element (B), resting against the vertical wall,
activating the gripping means (1, 2) into the splayed configuration (D) in order to release the grip on the tile (P) positioned vertically on the support element (B), and raise the head (T) along the vertical direction (V) in order to raise the gripping means (1, 2) by an amount such as to disengage the gripping means (1, 2) from the tile (P) and so that the lateral abutment element (3) is in an abutting position (W) facing a portion of a face (PF) of the tile (P) so as to prevent a tilting of the tile (P),
the method being **characterized by** comprising carrying out the further steps of:
moving the head (T), with the gripping means (1, 2) raised and disengaged from the tile (P) and with the lateral abutment element (3) in the abutting position (W) facing a portion of a face (FP) of the tile (P), along the first horizontal direction (O1) so as to translate the gripping means (1, 2) laterally with respect to the tile (P) leaving the lateral abutment element (3) in the abutting position (W) facing the face of the tile (FP) of the tile (P) in order to prevent a tilting of the tile (P), making a free manoeuvring space about the tile (P),
using the free manoeuvring space about the tile (P) in order to apply a strap about the tile (P) by means of the strapping machine (M3).

## Patentansprüche

1. Anlage (M) zum Palettieren von plattenförmigen Gegenständen, die großformatige Fliesen (P) mit großen Abmessungen sind, umfassend:
Fördermittel (M1) zum Fördern von Fliesen (P);
eine Kippvorrichtung (M2), zum Aufgreifen einer Fliese (P) von den Fördermitteln (M1) und zum Kippen der Fliese (P) in eine vertikale Konfiguration, um die Fliese in einer ersten Aufnahmeposition (P1) in Bezug auf die Fördermittel (M1) zu positionieren;
eine Palettierstation (E), umfassend ein Trägerelement (B), bestehend aus einer Palette, umfassend eine Auflagefläche und eine senkrechte Wand, in einer zweiten Ausgabeposition (P2) in Bezug auf die Fördermittel (M1), worauf die Fliese (P) senkrecht zu positionieren ist;
eine Greifvorrichtung (100), um die Fliese (P) von der ersten Aufnahmeposition (P1) aufzunehmen und die Fliese (P) in die zweite Ausgabeposition (P2) zu bewegen und dort senkrecht auf dem Trägerelement (B) zu positionieren,
wobei die Greifvorrichtung (100) umfasst:
einen Kopf (T), der in einer vertikalen Bewegungsrichtung (V) und in zumindest einer ersten horizontalen Bewegungsrichtung (O1), die orthogonal zu der vertikalen Richtung (V) ist, derart beweglich ist, dass er über die erste Aufnahmeposition (P1), in der die Fliese (P) senkrecht angeordnet ist, und über die zweite Ausgabeposition (P2), in der die Fliese (P) ausgegeben und senkrecht auf dem Trägerelement (B) zu positionieren ist, bewegt werden kann,
Greifmittel (1, 2), die auf dem Kopf (T) montiert sind und relativ zu dem Kopf (T) beweglich sind zwischen einer gespreizten Konfiguration (D) und einer einander angenäherten Konfiguration (R), wobei die Greifmittel (1, 2) so konfiguriert sind, dass sie, wenn sie in die einander angenäherte Konfiguration (R) gebracht werden, eine Fliese (P) einklemmen und eine Greifwirkung auf die Fliese (P) ausüben können, wobei der Kopf (T), mit den Greifmitteln (1, 2) in der gespreizten Konfiguration (D), über einer Fliese (P) positioniert werden kann, die senkrecht in der ersten Aufnahmeposition (P1) angeordnet ist, und entlang der vertikalen Richtung (V) derart zu der Fliese (P) hin beweglich ist, dass die Greifmittel (1, 2) an den Seiten der zwei Seitenflächen der Fliese (P) angeordnet werden, und wobei die Greifmittel (1, 2) dann in die einander angenäherte Konfiguration (R) bewegt werden können, um die Fliese (P) einzuklemmen und eine Greifwirkung auf die zwei Seitenflächen der Fliese (P) auszuüben,
wobei der Kopf (T), mit den Greifmitteln (1, 2) in der einander angenäherten Konfiguration (R), entlang der ersten horizontalen Richtung (O1) beweglich ist, um in der zweiten Ausgabeposition (P2) über dem Trägerelement (B) angeordnet zu werden, und entlang der vertikalen Richtung (V) zum Trägerelement (B) hin beweglich ist, um die Fliese (P), die von den Greifmitteln (1, 2) festgehalten wird, senkrecht auf dem Trägerelement (B) anzuordnen, so dass sie gegen die senkrechte Wand anliegt,
wobei die Greifvorrichtung (100) ferner zumindest ein seitliches Anschlagelement (3) für die Fliese (P) umfasst, wobei das seitliche Anschlagelement (3) derart relativ zu dem Kopf (T) und den Greifmitteln (1, 2) vorgesehen und konfiguriert ist, dass, wenn die Greifmittel (1, 2) aktiviert werden, um die gespreizte Konfiguration (D) einzunehmen und den Griff auf der Fliese (P) zu lösen, die senkrecht auf dem Trägerelement (B) angeordnet ist, und der Kopf (T) entlang der vertikalen Richtung (V) bewegt wird, um die Greifmittel (1, 2) so weit anzuheben, dass die Greifmittel (1, 2) außer Eingriff von der Fliese (P) gelangen, während das seitliche Anschlagelement (3) in einer Anschlagposition (W) und einem Abschnitt der Seitenfläche (PF) der Fliese (P) zugewandt bleibt, um das Umkippen der Fliese (P) zu vermeiden,
**dadurch gekennzeichnet, dass** die Anlage (M) ferner eine Umreifungsmaschine (M3) zum Umreifen der senkrecht auf dem Trägerelement (B) angeordneten Fliesen (P) umfasst,
und wobei der Kopf (T), während die Greifmittel (1, 2) angehoben und außer Eingriff von der Fliese (P) sind, und während sich das seitliche Anschlagelement (3) in der Anschlagposition (W) befindet und einem Abschnitt einer Seitenfläche (PF) der Fliese (P) zugewandt ist, entlang der ersten horizontalen Richtung (O1) derart beweglich ist, dass die Greifmittel (1, 2) seitlich relativ zu der Fliese (P) bewegt werden und dabei das seitliche Anschlagelement (3) in der Anschlagposition (W) und damit der Seitenfläche (PF) der Fliese (P) zugewandt belassen, um das Umkippen der Fliese (P) zu vermeiden, so dass ein freier Manövrierraum um die Fliese (P) herum erzeugt wird, um Verpackungsschritte durch die Umreifungsmaschine (M3) zum Umreifen der auf dem Trägerelement (B) senkrecht angeordneten Fliesen (P) ausführen zu können.

2. Anlage (M) nach Anspruch 1, wobei die Greifmittel (1, 2) eine erste Reihe (10) von Greifelementen (11) umfassen, die voneinander beabstandet in einer Reihe angeordnet sind und von einem ersten Trägerelement (110) getragen werden, das auf dem Kopf (T) montiert ist, und eine zweite Reihe (20) von Greifelementen (21) umfassen, die voneinander beabstandet in einer Reihe angeordnet sind und von einem zweiten Trägerelement (210) getragen werden, das auf dem Kopf (T) montiert ist, wobei das erste Trägerelement (110) und das zweite Trägerelement (210) derart auf dem Kopf (T) montiert sind, dass sie einander angenähert werden, um die Greifmittel (1, 2) in der einander angenäherten Konfiguration (R) zu positionieren, und voneinander beabstandet werden, um die Greifmittel (1, 2) in der gespreizten Konfiguration (D) zu positionieren, und wobei jedes Greifelement (11) der ersten Reihe (10) von Greifelementen (11) so konfiguriert ist, dass es einen flachen Greifabschnitt aufweist, der gegen einen entsprechenden Abschnitt einer ersten Seitenfläche der Fliese (P) anschlägt, und jedes Greifelement (21) der zweiten Reihe (20) von Greifelementen (21) so konfiguriert ist, dass es einen flachen Greifabschnitt aufweist, der gegen einen entsprechenden Abschnitt einer zweiten Seitenfläche der Fliese (P) anschlägt.

3. Anlage (M) nach Anspruch 2, wobei das zumindest eine seitliche Anschlagelement (3) entweder auf dem ersten Trägerelement (110) oder auf dem zweiten Trägerelement (210) montiert ist und eine größere Länge aufweist als die Greifelemente (11, 21) der ersten Reihe (10) von Greifelementen (11) und der zweiten Reihe (20) von Greifelementen (21).

4. Anlage (M) nach Anspruch 3, wobei das zumindest eine seitliche Anschlagelement (3) auf einer Seite eines ersten Greifelements (111) der Reihe von Greifelementen (11) der ersten Reihe (10) von Greifelementen (11) oder auf einer Seite eines ersten Greifelements der Reihe von Greifelementen (21) der zweiten Reihe (20) von Greifelementen (21) montiert ist.

5. Anlage (M) nach Anspruch 2, wobei das zumindest eine seitliche Anschlagelement (3) an einem ersten Greifelement der ersten Reihe (10) von Greifelementen (11) oder der zweiten Reihe (20) von Greifelementen (21) angeordnet und derart beschaffen ist, dass es die Länge des Greifelements relativ zu den anderen Greifelementen vergrößert.

6. Anlage (M) nach Anspruch 5, wobei das seitliche Anschlagelement (3) an einem ersten Greifelement (111) der Reihe von Greifelementen (11) der ersten Reihe (10) von Greifelementen (11) oder einem ersten Greifelement der Reihe von Greifelementen (21) der zweiten Reihe (20) von Greifelementen (21) angeordnet ist.

7. Anlage (M) nach einem der vorhergehenden Ansprüche, wobei der Kopf (T) in einer zweiten horizontalen Bewegungsrichtung beweglich ist, die orthogonal zu der vertikalen Richtung (V) und zu der ersten horizontalen Richtung (O1) ist.

8. Anlage (M) nach einem der vorhergehenden Ansprüche, wobei der Kopf (T) um eine vertikale Drehachse in eine Drehbewegung versetzt werden kann.

9. Anlage (M) nach Anspruch 8, wobei der Kopf (T) auf einer Welle (8) montiert ist, die in senkrechter Anordnung und um eine entsprechende Achse drehbar von einem Trägerwagen (81) getragen wird, wobei die Welle (8) derart auf dem Trägerwagen (81) gelagert ist, dass sie eine vertikale Translationsbewegung relativ zu dem Trägerwagen (81) ausführen kann, wobei der Trägerwagen (81) verschiebbar auf einem Querträger (82) montiert ist, der wiederum verschiebbar auf zwei erhöhten Längsträgern (83, 84) eines Portals (85) montiert ist.

10. Verfahren zum Palettieren von plattenförmigen Gegenständen mit großen Abmessungen, die großformatige Fliesen (P) sind, mittels eines Trägerelements (B) mit einer Auflagefläche und einer senkrechten Wand zum Abstützen der Fliesen in einer vertikalen Konfiguration, und mittels einer Umreifungsmaschine (M3), umfassend das Positionieren einer Fliese (P) in einer vertikalen Konfiguration in einer ersten Aufnahmeposition (P1), mittels einer Kippvorrichtung (M2), welche die auf den Fördermitteln (M1) beförderte Fliese (P) kippt, und das Aufnehmen der Fliese (P) von der ersten Aufnahmeposition (P1) und deren Überführen in eine zweite Ausgabeposition (P2) mit Positionieren der Fliese (P) in einer vertikalen Konfiguration über dem Trägerelement (B),
wobei, um die Fliese (P) von der ersten Aufnahmeposition (P1) aufzunehmen, sie zu überführen und in der zweiten Ausgabeposition (P2) senkrecht auf dem Trägerelement (B) zu positionieren, das Verfahren die Verwendung einer Greifvorrichtung (100) beinhaltet, die Folgendes umfasst:
einen Kopf (T), der beweglich ist in einer vertikalen Bewegungsrichtung (V) und zumindest in einer ersten horizontalen Bewegungsrichtung (O1), die orthogonal zu der vertikalen Richtung (V) ist, Greifmittel (1, 2), die auf dem Kopf (T) montiert und relativ zu dem Kopf (T) beweglich sind zwischen einer gespreizten Konfiguration (D) und einer einander angenäherten Konfiguration (R), wobei die Greifmittel (1, 2) derart konfiguriert sind, dass sie, wenn sie in die einander angenäherte Konfiguration (R) gebracht werden, eine Fliese (P) einklemmen und eine Greifwirkung auf die Fliese (P) ausüben können,
zumindest ein seitliches Anschlagelement (3) für die Fliese (P), wobei das seitliche Anschlagelement (3) derart relativ zu dem Kopf (T) und zu den Greifmitteln (1, 2) vorgesehen und angeordnet ist, dass, wenn die Greifmittel (1, 2) aktiviert werden, um die gespreizte Konfiguration (D) einzunehmen und den Griff auf der Fliese (P) zu lösen, und der Kopf (T) entlang der vertikalen Richtung (V) bewegt wird, um die Greifmittel (1, 2) so weit anzuheben, dass die Greifmittel (1, 2) außer Eingriff von der Fliese (P) gelangen, das seitliche Anschlagelement (3) in einer Anschlagposition (W) und einem Abschnitt der Seitenfläche (PF) der Fliese (P) zugewandt bleibt, um das Umkippen der Fliese (P) zu vermeiden,
wobei das Verfahren die Ausführung der folgenden Schritte beinhaltet:
Bewegen des Kopfes (T), mit den Greifmitteln (1, 2) in der gespreizten Konfiguration (D), entlang der ersten horizontalen Bewegungsrichtung (O1), um die Greifmittel (1, 2) über der Fliese (P) zu positionieren, die senkrecht in der ersten Aufnahmeposition (P1) angeordnet ist,
Bewegen des Kopfes (T) entlang der vertikalen Richtung (V) zu der Fliese (P) hin, so dass die Greifmittel (1, 2) an den Seiten der zwei Seitenflächen der Fliese (P) angeordnet werden, und Aktivieren der Greifmittel (1, 2), damit sie die einander angenäherte Konfiguration (R) einnehmen, um die Fliese (P) einzuklemmen und eine Greifwirkung auf die zwei Seitenflächen der Fliese (P) auszuüben,
Bewegen des Kopfes (T), mit den Greifmitteln (1, 2) in der einander angenäherten Konfiguration (R), entlang der ersten horizontalen Richtung (O1), um die von den Greifmitteln (1, 2) gehaltene Fliese (P) in der zweiten Ausgabeposition (P2) über dem Trägerelement (B) zu positionieren, und Bewegen des Kopfes (T) entlang der vertikalen Richtung (V) zum Trägerelement (B) hin, um die Fliese (P) senkrecht auf dem Trägerelement (B) anzuordnen, so dass sie gegen die senkrechte Wand anliegt,
Aktivieren der Greifmittel (1, 2), damit sie die gespreizte Konfiguration (D) einnehmen und somit den Griff auf der Fliese (P) lösen, die senkrecht auf dem Trägerelement (B) positioniert ist, und Anheben des Kopfes (T) entlang der vertikalen Richtung (V), um die Greifmittel (1, 2) so weit anzuheben, dass die Greifmittel (1, 2) außer Eingriff von der Fliese (P) gelangen, und so dass sich das seitliche Anschlagelement (3) in einer Anschlagposition (W) befindet und einem Abschnitt einer Seitenfläche (PF) der Fliese (P) zugewandt ist, um das Umkippen der Fliese (P) zu vermeiden,
wobei das Verfahren **dadurch gekennzeichnet ist, dass** es ferner die Ausführung der folgenden Schritte beinhaltet:
Bewegen des Kopfes (T), während die Greifmittel (1, 2) angehoben und außer Eingriff von der Fliese (P) sind, und während sich das seitliche Anschlagelement (3) in der Anschlagposition (W) befindet und einem Abschnitt einer Seitenfläche (PF) der Fliese (P) zugewandt ist, entlang der ersten horizontalen Richtung (O1), so dass die Greifmittel (1, 2) seitlich relativ zu der Fliese (P) bewegt werden und dabei das seitliche Anschlagelement (3) in der Anschlagposition (W) und damit der Seitenfläche (PF) der Fliese (P) zugewandt belassen wird, um das Umkippen der Fliese (P) zu vermeiden, so dass ein freier Manövrierraum um die Fliese (P) erzeugt wird,
Verwenden des freien Manövrierraums um die Fliese (P) zum Anbringen einer Umreifung um die Fliese (P) mittels der Umreifungsmaschine (M3).

## Revendications

1. Une installation (M) de palettisation d'articles en forme de plaques, tels que des carreaux (P) de grandes dimensions, comprenant :
des moyens de transport (M1), pour transporter des carreaux (P) ;
un dispositif de basculement (M2), pour saisir un carreau (P) des moyens de transport (M1) et pour basculer le carreau (P) dans une configuration verticale, positionnant ainsi le carreau dans une première position de prélèvement (P1) par rapport aux moyens de transport (M1) ;
une station de palettisation (E), comprenant un élément de support (B), constitué par un banc comprenant un plan d'appui et une paroi verticale, dans une deuxième position de relâche (P2) par rapport aux moyens de transport (M1), sur lequel le carreau (P) doit être positionné verticalement ;
un dispositif de préhension (100), pour prélever le carreau (P) de la première position de prélèvement (P1) et pour déplacer et positionner le carreau (P) dans la deuxième position de relâche (P2) verticalement sur l'élément de support (B),
où le dispositif de préhension (100) comprend :
une tête (T), mobile dans une direction verticale de déplacement (V) et au moins dans une première direction horizontale de déplacement (O1), perpendiculaire à la direction verticale (V), de manière à pouvoir être déplacée au-dessus de la première position de prélèvement (P1), dans laquelle le carreau (P) est disposé verticalement, et au-dessus de la deuxième position de relâche (P2), dans laquelle le carreau (P) doit être relâché et positionné verticalement sur l'élément de support (B),
des moyens de préhension (1, 2), montés sur la tête (T) et pouvant être déplacés par rapport à la tête (T) entre une configuration écartée (D) et une configuration rapprochée (R), les moyens de préhension (1, 2) sont configurés de manière à ce que, lorsque placés dans la configuration rapprochée (R), ils puissent serrer un carreau (P) et exercer une action de préhension sur le carreau (P),
où la tête (T), avec les moyens de préhension (1, 2) dans la configuration écartée (D), peut être positionnée au-dessus d'un carreau (P) disposé verticalement dans la première position de prélèvement (P1), et peut être déplacée le long de la direction verticale (V) vers le carreau (P) de manière à ce que les moyens de préhension (1, 2) soient disposés au niveau des côtés des deux faces du carreau (P), et où les moyens de préhension (1, 2) peuvent ensuite être déplacés dans la configuration rapprochée (R) de manière à serrer le carreau (P) et à exercer une action de préhension sur les deux faces du carreau (P),
où la tête (T), avec les moyens de préhension (1, 2) dans la configuration rapprochée (R), peut être déplacée le long de la première direction horizontale (O1) pour être positionnée dans la deuxième position de relâche (P2) au-dessus de l'élément de support (B) et peut être déplacée le long de la direction verticale (V) vers l'élément de support (B) pour positionner le carreau (P), retenu par les moyens de préhension (1, 2), verticalement sur l'élément de support (B) en appui contre la paroi verticale,
le dispositif de préhension (100) comprenant en outre au moins un élément latéral (3) de butée du carreau (P), l'élément latéral de butée (3) étant prédisposé et configuré, par rapport à la tête (T) et aux moyens de préhension (1, 2), de manière à ce que, lorsque les moyens de préhension (1, 2) sont actionnés dans la configuration écartée (D) afin de relâcher la prise sur le carreau (P) positionné verticalement su l'élément de support (B) et que la tête (T) est déplacée le long de la direction verticale (V) afin de soulever les moyens de préhension (1, 2) d'une quantité telle que les moyens de préhension (1, 2) se désengagent du carreau (P), l'élément latéral de butée (3) reste dans une position de butée (W) face à une portion d'une face (PF) du carreau (P) de manière à empêcher un basculement du carreau (P),
**caractérisée en ce que** l'installation (M) comprend en outre une machine à cercler (M3) pour le cerclage des carreaux (P) disposés verticalement sur l'élément de support (B),
et où la tête (T), avec les moyens de préhension (1, 2) soulevés et dégagés du carreau (P) et avec l'élément latéral de butée (3) dans la position de butée (W) face à une portion d'une face (PF) du carreau (P), peut être déplacée le long de la première direction horizontale (O1) de manière à déplacer les moyens de préhension (1, 2) en translation latérale par rapport au carreau (P) en laissant l'élément latéral de butée (3) dans la position de butée (W) face à la face (PF) du carreau (P) afin d'empêcher un basculement du carreau (P), créant un espace libre de manœuvre autour du carreau (P) pour l'exécution des opérations d'emballage par la machine à cercler (M3) pour le cerclage des carreaux (P) disposés verticalement sur l'élément de support (B).

2. L'installation (M) selon la revendication 1, dans laquelle les moyens de préhension (1, 2) comprennent une première série (10) d'éléments de préhension (11) disposés en rangée, espacés les uns des autres, et portés par un premier élément de support (110) monté sur la tête (T), et une deuxième série (20) d'éléments de préhension (21) disposés en rangée, espacés les uns des autres, et portés par un deuxième élément de support (210) monté sur la tête (T), le premier élément de support (110) et le deuxième élément de support (210) étant montés sur la tête (T) de manière à être rapprochés l'un de l'autre, pour positionner les moyens de préhension (1, 2) dans la configuration rapprochée (R), et éloignés l'un de l'autre, pour positionner les moyens de préhension (1, 2) dans la configuration écartée (D), et dans laquelle chaque élément de préhension (11) de la première série (10) d'éléments de préhension (11) est configuré de manière à avoir une portion de préhension plate pour rencontrer une portion correspondante d'une première face du carreau (P) et chaque élément de préhension (21) de la deuxième série (20) d'éléments de préhension (21) est configuré de manière à avoir une portion de préhension plate pour rencontrer une portion correspondante d'une deuxième face du carreau (P).

3. L'installation (M) selon la revendication 2, dans laquelle ledit au moins un élément latéral de butée (3) est monté sur l'un entre le premier élément de support (110) et le deuxième élément de support (210) et a une plus grande longueur que les éléments de préhension (11, 21) de la première série (10) d'éléments de préhension (11) et de la deuxième série (20) d'éléments de préhension (21).

4. L'installation (M) selon la revendication 3, dans laquelle ledit au moins un élément latéral de butée (3) est monté au niveau d'un côté d'un premier élément de préhension (111) de la rangée d'éléments de préhension (11) de la première série (10) d'éléments de préhension (11) ou au niveau d'un côté d'un premier élément de préhension de la rangée d'éléments de préhension (21) de la deuxième série (20) d'éléments de préhension (21).

5. L'installation (M) selon la revendication 2, dans laquelle ledit au moins un élément latéral de butée (3) est positionné au niveau d'un premier élément de préhension de la première série (10) d'éléments de préhension (11) ou de la deuxième série (20) d'éléments de préhension (21) et est tel qu'il augmente la longueur de l'élément de préhension par rapport aux autres éléments de préhension.

6. L'installation (M) selon la revendication 5, dans laquelle l'élément latéral de butée (3) est positionné au niveau d'un premier élément de préhension (111) de la rangée d'éléments de préhension (11) de la première série (10) d'éléments de préhension (11) ou d'un premier élément de préhension de la rangée d'éléments de préhension (21) de la deuxième série (20) d'éléments de préhension (21).

7. L'installation (M) selon l'une quelconque des revendications précédentes, dans laquelle la tête (T) peut être déplacée dans une deuxième direction horizontale de déplacement, perpendiculaire à la direction verticale (V) et à la première direction horizontale (O1).

8. L'installation (M) selon l'une quelconque des revendications précédentes, dans laquelle la tête (T) peut être mise en rotation autour d'un axe de rotation vertical.

9. L'installation (M) selon la revendication 8, dans laquelle la tête (T) est montée sur un arbre (8) qui est porté disposé verticalement, et de façon rotative autour d'un axe respectif, par un chariot de support (81), l'arbre (8) étant porté par le chariot de support (81) de manière à pouvoir être déplacé en translation verticale par rapport au chariot de support (81), dans laquelle le chariot de support (81) est monté de façon à pouvoir être déplacé en translation sur une traverse (82) qui, à son tour, est montée de façon à pouvoir être déplacée en translation sur deux éléments longitudinaux surélevés (83, 84) d'un portique (85).

10. Un procédé de palettisation d'articles en forme de plaques de grandes dimensions, tels que des carreaux (P), au moyen d'un élément de support (B), avec un plan d'appui et une paroi verticale pour supporter les carreaux dans une configuration verticale, et une machine à cercler (M3), prévoyant le positionnement d'un carreau (P) dans une configuration verticale dans une première position de prélèvement (P1), au moyen d'un dispositif de basculement (M2) qui bascule le carreau (P) transporté sur les moyens de transport (M1), et le prélèvement du carreau (P) de la première position de prélèvement (P1) et son transfert dans une deuxième position de relâche (P2), avec le positionnement du carreau (P) dans une configuration verticale sur l'élément de support (B),
où, pour prélever le carreau (P) de la première position de prélèvement (P1) et le transférer et positionner dans la deuxième position de relâche (P2) verticalement au-dessus de l'élément de support (B), le procédé prévoit l'utilisation d'un dispositif de préhension (100) comprenant :
une tête (T), mobile dans une direction verticale de déplacement (V) et au moins dans une première direction horizontale de déplacement (O1), perpendiculaire à la direction verticale (V),
des moyens de préhension (1, 2), montés sur la tête (T) et pouvant être déplacés par rapport à la tête (T) entre une configuration écartée (D) et une configuration rapprochée (R), les moyens de préhension (1, 2) étant configurés de telle sorte que, lorsque placés dans la configuration rapprochée (R), ils peuvent serrer un carreau (P) et exercer une action de préhension sur le carreau (P),
au moins un élément latéral (3) de butée du carreau (P), l'élément latéral de butée (3) étant prédisposé et configuré, par rapport à la tête (T) et aux moyens de préhension (1, 2), de manière à ce que, lorsque les moyens de préhension (1, 2) sont actionnés dans la configuration écartée (D) afin de relâcher la prise sur le carreau (P) et que la tête (T) est déplacée le long de la direction verticale (V) afin de soulever les moyens de préhension (1, 2) d'une quantité telle que les moyens de préhension (1, 2) se désengagent du carreau (P), l'élément latéral de butée (3) reste dans une position de butée (W) face à une portion d'une face (PF) du carreau (P) de manière à empêcher un basculement du carreau (P),
le procédé comprenant l'exécution des étapes suivantes :
déplacer la tête (T), avec les moyens de préhension (1, 2) dans la configuration écartée (D), le long de la première direction horizontale de déplacement (O1) pour positionner les moyens de préhension (1, 2) au-dessus du carreau (P) disposé verticalement dans la première position de prélèvement (P1),
déplacer la tête (T) le long de la direction verticale (V) vers le carreau (P) de manière à ce que les moyens de préhension (1, 2) soient disposés au niveau des côtés des deux faces du carreau (P), et actionner les moyens de préhension (1, 2) dans la configuration rapprochée (R) pour serrer le carreau (P) et exercer une action de préhension sur les deux faces du carreau (P),
déplacer la tête (T), avec les moyens de préhension (1, 2) dans la configuration rapprochée (R), le long de la première direction horizontale (O1) pour positionner le carreau (P) retenu par les moyens de préhension (1, 2) dans la deuxième position de relâche (P2) au-dessus de l'élément de support (B) et déplacer la tête (T) le long de la direction verticale (V) vers l'élément de support (B) pour positionner le carreau (P) verticalement sur l'élément de support (B), en appui contre la paroi verticale,
actionner les moyens de préhension (1, 2) dans la configuration écartée (D) afin de relâcher la prise sur le carreau (P) positionné verticalement sur l'élément de support (B), et soulever la tête (T) le long de la direction verticale (V) afin de soulever les moyens de préhension (1, 2) d'une quantité telle que les moyens de préhension (1, 2) se désengagent du carreau (P) et afin que l'élément latéral de butée (3) soit dans une position de butée (W) face à une portion d'une face (PF) du carreau (P) afin d'empêcher un basculement du carreau (P),
le procédé étant **caractérisé en ce qu'**il prévoit l'exécution des autres étapes consistant à :
déplacer la tête (T), avec les moyens de préhension (1, 2) soulevés et dégagés du carreau (P) et avec l'élément latéral de butée (3) dans la position de butée (W) face à une portion d'une face (PF) du carreau (P), le long de la première direction horizontale (O1) de manière à déplacer les moyens de préhension (1, 2) en translation latérale par rapport au carreau (P) en laissant l'élément latéral de butée (3) dans la position de butée (W) face à la face (PF) du carreau (P) afin d'empêcher un basculement du carreau (P), créant un espace libre de manœuvre autour du carreau (P),
utiliser l'espace libre de manœuvre autour du carreau (P) pour appliquer un feuillard de cerclage autour du carreau (P) au moyen de la machine à cercler (M3).
